# EUROPEAN PATENT SPECIFICATION

(11) **EP 4 025 937 B1**
(45) Date of publication and mention of the grant of the patent: **10.01.2024**
(21) Application number: 20765097.9
(22) Date of filing: 26.08.2020
(51) Int. Cl.: G01V 1/30, G01V 1/34, G01V 1/36, G06N 3/02

(54) **SYSTEM AND METHOD FOR SEISMIC IMAGING OF SUBSURFACE VOLUMES INCLUDING COMPLEX GEOLOGY**
SYSTEM UND VERFAHREN ZUR SEISMISCHEN ABBILDUNG VON UNTERIRDISCHEN VOLUMEN MIT KOMPLEXER GEOLOGIE
SYSTÈME ET PROCÉDÉ D'IMAGERIE SISMIQUE DE VOLUMES SOUTERRAINS PRÉSENTANT UNE GÉOLOGIE COMPLEXE

(30) Priority: 03.09.2019 US 201962895494 P
(43) Date of publication of application: 13.07.2022
(73) Proprietor: Chevron U.S.A. Inc., San Ramon, CA 94583 (US)
(72) Inventor: WANG, Enning, San Ramon, California 94583 (US)
(74) Representative: Haseltine Lake Kempner LLP
(86) International application number: PCT/IB2020/057968
(87) International publication number: WO 2021/044256

(56) References cited:
- ENNING WANG ET AL: "Applying machine learning to 3D seismic image denoising and enhancement", INTERPRETATION, vol. 7, no. 3, 1 August 2019 (2019-08-01), pages SE131-SE139, XP055748786, US ISSN: 2324-8858, DOI: 10.1190/INT-2018-0224.1
- Gao Han ET AL: "Simultaneous Denoising and Interpolation of Seismic Data via the Deep Learning Method", Earthquake research in China, 1 January 2019 (2019-01-01), pages 37-51, XP055748933, DOI: 10.19743/j.cnki.0891-4176.201901003 Retrieved from the Internet: URL:http://erc.eq-j.cn/html/2019/1/2019010 4.htm [retrieved on 2020-11-10]
- DIMITRI BEVC ET AL: "Automatic seismic facies interpretation based on an enhanced encoder-decoder structure", SEG TECHNICAL PROGRAM EXPANDED ABSTRACTS 2019, 1 August 2019 (2019-08-01), pages 2408-2412, XP055749163, DOI: 10.1190/segam2019-3215516.1
- HU CHEN ET AL: "Low-Dose CT with a Residual Encoder-Decoder Convolutional Neural Network (RED-CNN)", ARXIV.ORG, CORNELL UNIVERSITY LIBRARY, 201 OLIN LIBRARY CORNELL UNIVERSITY ITHACA, NY 14853, 1 February 2017 (2017-02-01), XP081277321, DOI: 10.1109/TMI.2017.2715284

## Description

### TECHNICAL FIELD

The disclosed embodiments relate generally to techniques for seismic imaging of subsurface volumes and, in particular, to a method of seismic imaging of subsurface volumes using machine-learning.

### BACKGROUND

Seismic exploration involves surveying subterranean geological media for hydrocarbon deposits. A survey typically involves deploying seismic sources and seismic sensors at predetermined locations. The sources generate seismic waves, which propagate into the geological medium creating pressure changes and vibrations. Variations in physical properties of the geological medium give rise to changes in certain properties of the seismic waves, such as their direction of propagation and other properties.

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors.

Seismic data is processed to create seismic images that can be interpreted to identify subsurface geologic features including hydrocarbon deposits. Seismic images, particularly in areas of complex subsurface geology, may have regions that are poorly imaged due to poor illumination, conflicting dips, random noise, migration swing noise, and other undesirable artifacts.

The ability to define the location of rock and fluid property changes in the subsurface is crucial to our ability to make the most appropriate choices for purchasing materials, operating safely, and successfully completing projects. Project cost is dependent upon accurate prediction of the position of physical boundaries within the Earth. Decisions include, but are not limited to, budgetary planning, obtaining mineral and lease rights, signing well commitments, permitting rig locations, designing well paths and drilling strategy, preventing subsurface integrity issues by planning proper casing and cementation strategies, and selecting and purchasing appropriate completion and production equipment. Reference may be made to ENNING WANG ET AL: "Applying machine learning to 3D seismic image denoising and enhancement", INTERPRETATION, vol. 7, no. 3, 1 August 2019, pages SE131-SE139. It relates to training a supervised deep 3D convolutional neural network (CNN) on marine seismic images for poststack structural seismic image enhancement and noise attenuation. The processed outputs of the trained neural network are much cleaner than the inputs, and they highlight geologic structures for easier interpretation. Different scales of geologic structures, from high- resolution faults and diffractors to deep subsalt sediments, are well-preserved by the deep neural network. Reference may be made to Gao Han ET AL: "Simultaneous Denoising and Interpolation of Seismic Data via the Deep Learning Method", Earthquake research in China, 1 January 2019, pages 37-51. It proposes a simultaneous denoising and interpolation method based on deep learning. For noisy records with missing traces, it adopts an iterative alternating optimization strategy and separates the objective function of the data restoring problem into two sub-problems. The seismic records can be reconstructed by solving a least-squares problem and applying a set of pre-trained denoising models alternatively and iteratively. Reference may be made to Dimitri Bevc ET AL: "Automatic seismic facies interpretation based on an enhanced encoder-decoder structure", SEG Technical Program Expanded Abstracts 2019, 1 August 2019. It relates to a scheme which is based on an enhanced encoder-decoder structure named DeepLabv3+ developed by Google. The encoder-decoder structure performs more accurately and efficiently than CNN models, and simple semantic segmentation models such as a deconvolutional neural network are used for extracting multi-scale contextual information and recovering more pixel-level details in prediction results: None of the references above discloses that the atrous convolution uses varying rectangular atrous rates instead of equal atrous rates in all dimensions.

There exists a need for improved seismic imaging that will allow better seismic interpretation of potential hydrocarbon reservoirs.

### SUMMARY

The present invention is defined by the appended independent claims to which reference should now be made. Specific embodiments are defined in the dependent claims. In accordance with some embodiments, a method of seismic imaging including image enhancement using a trained neural network is disclosed.

In an embodiment, the features extracted by the rectangular atrous rates are concatenated and convolved with a series of 3x3x3 kernels to generate features of varying scales.

In another embodiment, multiple neural networks are trained on separate seismic images of different frequency, grid size and migration algorithm.

In another embodiment, the neural network is applied by one or multiple passes to neighboring depth ranges with different down-sampling rates.

In another embodiment, training the neural network includes an encoder-decoder architecture in three dimensions.

In another aspect of the present invention, to address the aforementioned problems, some embodiments provide a non-transitory computer readable storage medium storing one or more programs according to claim 9.

The one or more programs comprise instructions, which when executed by a computer system with one or more processors and memory, cause the computer system to perform any of the methods provided herein.

In yet another aspect of the present invention, to address the aforementioned problems, some embodiments provide a computer system according to claim 7.

The computer system includes one or more processors, memory, and one or more programs. The one or more programs are stored in memory and configured to be executed by the one or more processors. The one or more programs include an operating system and instructions that when executed by the one or more processors cause the computer system to perform any of the methods provided herein.

### BRIEF DESCRIPTION OF THE DRAWINGS

Figure 1 illustrates a method of seismic imaging with machine-learning;
Figure 2 shows results of a method of seismic imaging with machine-learning and some areas that need additional enhancement;
Figure 3 illustrates an embodiment of seismic imaging with machine-learning;
Figure 4 is an example of a seismic image with poor signal to noise ratio;
Figure 5 is an example of a result of an embodiment of seismic imaging with machine-learning;
Figure 6 is an example of a result of another embodiment of seismic imaging with machine-learning;
Figure 7 is an example of a seismic image with poor signal to noise ratio;
Figure 8 is an example of a result of an embodiment of seismic imaging with machine-learning;
Figure 9 is an example of a result of another embodiment of seismic imaging with machine-learning;
Figure 10 is an example of a seismic image with poor signal to noise ratio;
Figure 11 is an example of a result of an embodiment of seismic imaging with machine-learning;
Figure 12 is an example of a result of another embodiment of seismic imaging with machine-learning;
Figure 13 is an example of a seismic image with poor signal to noise ratio;
Figure 14 is an example of a result of an embodiment of seismic imaging with machine-learning;
Figure 15 is an example of a result of another embodiment of seismic imaging with machine-learning; and
Figure 16 is a block diagram illustrating a seismic imaging system, in accordance with some embodiments.

Like reference numerals refer to corresponding parts throughout the drawings.

### DETAILED DESCRIPTION OF EMBODIMENTS

Described below are methods, systems, and computer readable storage media that provide a manner of seismic imaging. These embodiments are designed to be of particular use for seismic imaging of subsurface volumes in geologically complex areas.

Advantageously, those of ordinary skill in the art will appreciate, for example, that the embodiments provided herein may be utilized to generate a more accurate digital seismic image (i.e., the corrected digital seismic image). The more accurate digital seismic image may improve hydrocarbon exploration and improve hydrocarbon production. The more accurate digital seismic image may provide details of the subsurface that were illustrated poorly or not at all in traditional seismic images. Moreover, the more accurate digital seismic image may better delineate where different features begin, end, or any combination thereof. As one example, the more accurate digital seismic image may illustrate faults and/or salt flanks more accurately. As another example, assume that the more accurate digital seismic image indicates the presence of a hydrocarbon deposit. The more accurate digital seismic image may delineate more accurately the bounds of the hydrocarbon deposit so that the hydrocarbon deposit may be produced.

Those of ordinary skill in the art will appreciate, for example, that the more accurate digital seismic image may be utilized in hydrocarbon exploration and hydrocarbon production for decision making. For example, the more accurate digital seismic image may be utilized to pick a location for a wellbore. Those of ordinary skill in the art will appreciate that decisions about (a) where to drill one or more wellbores to produce the hydrocarbon deposit, (b) how many wellbores to drill to produce the hydrocarbon deposit, etc. may be made based on the more accurate digital seismic image. The more accurate digital seismic image may even be utilized to select the trajectory of each wellbore to be drilled. Moreover, if the delineation indicates a large hydrocarbon deposit, then a higher number of wellbore locations may be selected and that higher number of wellbores may be drilled, as compared to delineation indicating a smaller hydrocarbon deposit.

Those of ordinary skill in the art will appreciate, for example, that the more accurate digital seismic image may be utilized in hydrocarbon exploration and hydrocarbon production for control. For example, the more accurate digital seismic image may be utilized to steer a tool (e.g., drilling tool) to drill a wellbore. A drilling tool may be steered to drill one or more wellbores to produce the hydrocarbon deposit. Steering the tool may include drilling around or avoiding certain subsurface features (e.g., faults, salt diapirs, shale diapirs, shale ridges, pockmarks, buried channels, gas chimneys, shallow gas pockets, and slumps), drilling through certain subsurface features (e.g., hydrocarbon deposit), or any combination thereof depending on the desired outcome. As another example, the more accurate digital seismic image may be utilized for controlling flow of fluids injected into or received from the subsurface, the wellbore, or any combination thereof. As another example, the more accurate digital seismic image may be utilized for controlling flow of fluids injected into or received from at least one hydrocarbon producing zone of the subsurface. Chokes or well control devices, positioned on the surface or downhole, may be used to control the flow of fluid into and out. For example, certain subsurface features in the more accurate digital seismic image may prompt activation, deactivation, modification, or any combination thereof of the chokes or well control devices so as control the flow of fluid. Thus, the more accurate digital seismic image may be utilized to control injection rates, production rates, or any combination thereof.

Those of ordinary skill in the art will appreciate, for example, that the more accurate digital seismic image may be utilized to select completions, components, fluids, etc. for a wellbore. A variety of casing, tubing, packers, heaters, sand screens, gravel packs, items for fines migration, etc. may be selected for each wellbore to be drilled based on the more accurate digital seismic image. Furthermore, one or more recovery techniques to produce the hydrocarbon deposit may be selected based on the more accurate digital seismic image.

In short, those of ordinary skill in the art will appreciate that there are many decisions (e.g., in the context of (a) steering decisions, (b) landing decisions, (c) completion decisions, (d) engineering control systems and reservoir monitoring in the following but not limited to: Tow Streamer, Ocean Bottom Sensor, VSP, DASVSP, and imaging with both primaries and free surface multiple, etc.) to make in the hydrocarbon industry and making proper decisions based on more accurate digital seismic images should improve the likelihood of safe and reliable operations. For simplicity, the many possibilities, including wellbore location, component selection for the wellbore, recovery technique selection, controlling flow of fluid, etc., may be collectively referred to as managing a subsurface reservoir.

Reference will now be made in detail to various embodiments, examples of which are illustrated in the accompanying drawings. In the following detailed description, numerous specific details are set forth in order to provide a thorough understanding of the present disclosure and the embodiments described herein. It should be noted and understood that there can be improvements and modifications made of the present invention described in detail below without departing from the scope of the invention as set forth in the accompanying claims.

Seismic imaging of the subsurface is used to identify potential hydrocarbon reservoirs. Seismic data is acquired at a surface (e.g. the earth's surface, ocean's surface, or at the ocean bottom) as seismic traces which collectively make up the seismic dataset. As is known to those of skill in the art, seismic data is subjected to a seismic imaging process such as migration to generate seismic images. Seismic images, particularly in areas of complex subsurface geology, may have regions that are poorly imaged due to sparse seismic acquisition, noise in input traces, poor illumination, incorrect migration velocity, and unrealistic physics in the migration algorithm. The resulting undesirable artifacts in migrated images include random noise, migration swing noise, conflicting dips, amplitude striping, poor signal-to-noise ratio (S/N) in deep sections, etc. Previous attempts to attenuate these artifacts using machine-learning, such as US2019/0170888 "Systems and Methods for Refining Estimated Parameter Values in Seismic Imaging", have failed to efficiently encode the multi-scale features in seismic images and may result in poor performance (residual coherent noise, poor illumination or damaged signals) mainly in the over-sampled deep part of the image.

In this work the goal is to train Deep Learning models and apply to new datasets outside of the training set "as is", without re-training or fine-tuning during prediction. The volume used in prediction is thus not included in the training set and may have been acquired & migrated at different frequency and sampled on grid sizes different from the training dataset. Since the divergence in object-scale between training set and prediction volume affects the model performance at inference time. It is conceivably difficult for a model trained on a specific training set to generalize universally during prediction on any field dataset. The spatial variation of structural wavelength within one seismic volume further complicates the issue. Our solution is to build multiple training sets corresponding to different data acquisition, migration algorithm and frequency and train a collection of models on these training datasets, and only apply the model to a prediction volume with similar data type, imaging algorithm and frequency.

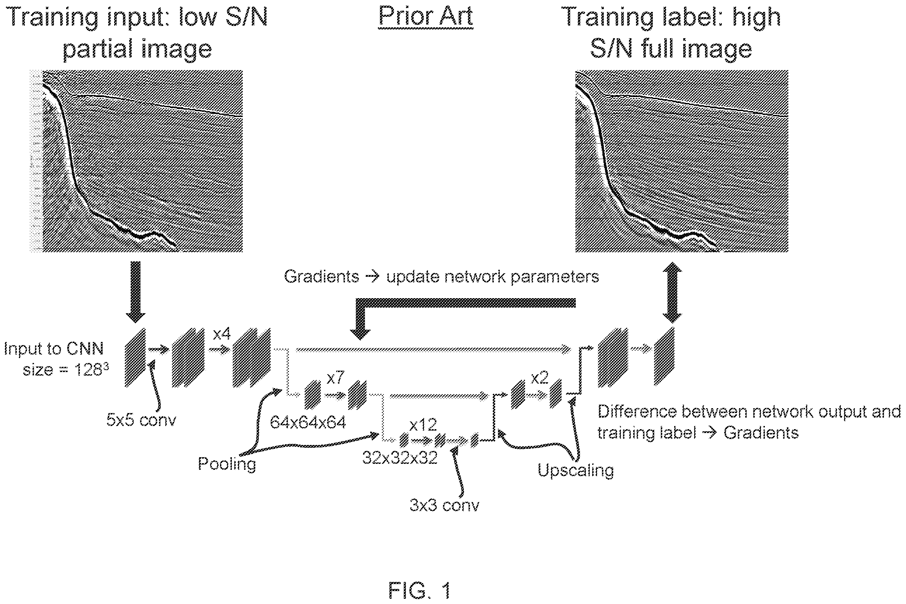

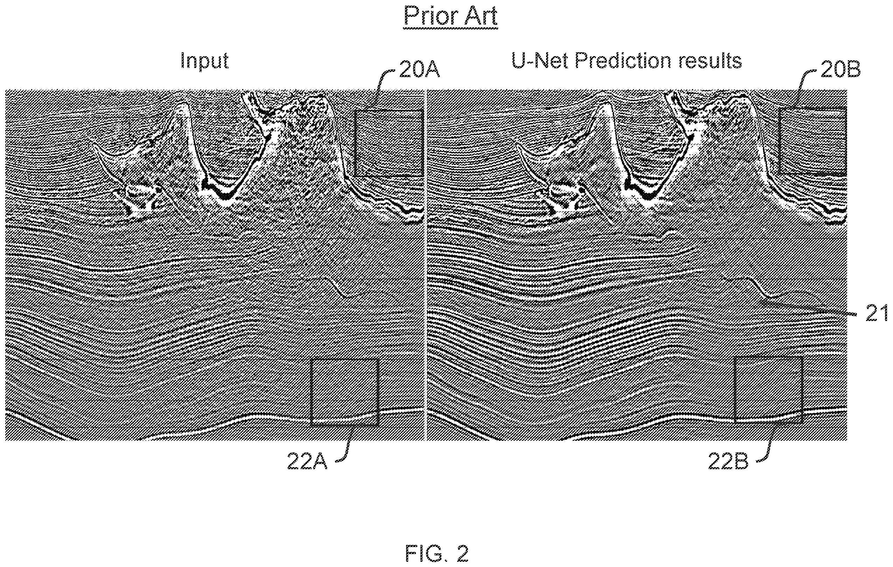

Within one seismic volume, a reason for performance degradation in deep sections is the depth-varying structural wavelength of seismic images due to attenuation and increasing velocity. Even though the structural wavelength and feature scales vary with depth, seismic images are routinely sampled on constant grids, and the grid size must be small enough to accommodate the shallow details. As a result, the low-wavenumber dominated deep sections are usually over-sampled. Besides the general trend of increasing scale with depth, features of various scales exist at similar depths in seismic images, which include features of the same type such as faults from small fractures to major regional ones, and features of different nature, e.g., diffractors and salt bodies. To learn the representation of objects that span an order of magnitude in scale requires that the network encodes varying scales and has the capacity of certain number of layers and channels to pass the large amount of information associated. GPU memory in this case may become a bottleneck for training high-capacity 3D models. On the other hand, most of the conventional convolutional network architectures apply layers of pixel-based filters of fixed sizes in a sliding window on original images, which have difficulty encoding features of multiple scales, as shown in Figures 1 and 2. In Figure 1, a prior art method for training a neural network using a U-Net architecture is shown. Figure 2 demonstrates the result of using a U-Net architecture as shown in Figure 1, wherein the training cubes (examples shown as 20A and 20B) are 128x128x128 pixels. Training cubes of this size are smaller than the coherent swing noise 21. As shown in boxes 22A and 22B, the performance of such networks degrades in the oversampled deep part of the image, where the signal to noise ratio (S/N) is usually lower than shallow with lots of structural uncertainties. The present invention leverages an increasing field of view and extracting multi-scale features so that it can be effectively applied to resolve the multi-scale issue in 3D seismic enhancement.

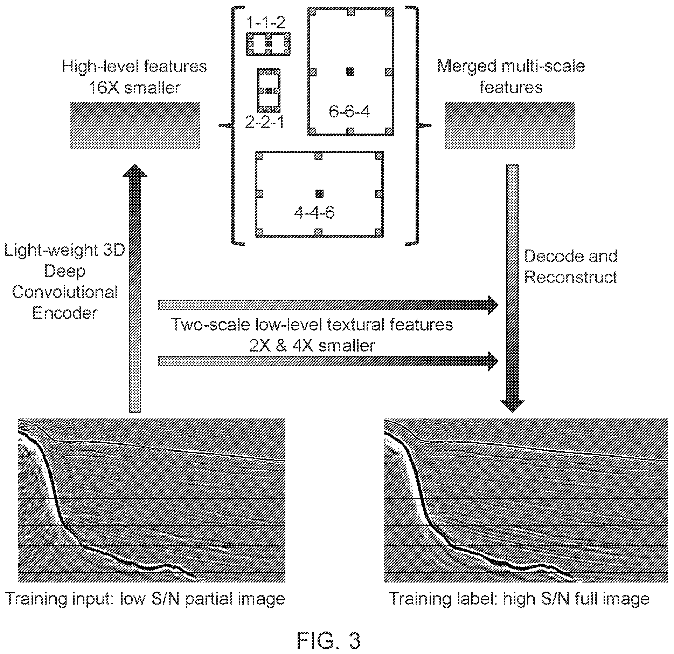

Including atrous convolution in neural architecture design has previously been used in image segmentation to increase effective field of view. The present invention leverages atrous convolution to solve a different problem, handling scale variation and oversampling in the deep part of seismic images as shown in Figure 3. Atrous convolution samples every few pixels of the layer input and convolves with the convolutional filters, or equivalently insert zeros in the filters to convolve with the original input. Atrous convolution increases the field of view without increasing memory or computational cost. The sampling rate or the number of inserted zeros in atrous convolution is referred to as dilation rate or rate.

Without including multiple atrous convolutions of varying rates in a neural network, windowed, multi-pass of a single trained model at down-sampled deep section serves as a workaround for spatially varying structural length and oversampled deep. Empirical tests based on this method show that a sequence of rates from large to small (such as 2-2-2 followed by 1-1-1 for inline, xline and depth) works reasonably well at depth where dominant frequency is lower than shallow. The idea behind a two-pass processing is that the first pass on down-sampled deep section attenuates noise and enhance large-scale structures and the second pass on the original data removes small-scale random noise. For shallow sections with higher S/N and smaller feature scale, a straight application of the model without down-sampling usually suffices. The largest grid size to start with (2-2-2 in the example) can be picked either from visual inspection of the results or based on the dominant structural wavelength vs. depth and the grid size.

Applying a model with a combination of rates represented by vertically stretched and squeezed rectangular cuboids produces superior results than that of a cube. For example, predicting with a model with rates of 1-1-2 & 2-2-1 outperforms the combination of 2-2-2 and 1-1-1 for noise attenuation and signal enhancement. This can be intuitively understood as a result of altering both dip and scale as opposed to scale only to better adapt to various scale and aspect ratio information. However, the windowed, multi-pass applications of a single trained network have a limitation that it does not allow features to vary or communicate among different scales/passes.

There are existing network architectures that are specifically used for encoding multi-scale features in a single network for 2D image segmentation. The core of such architectures lies in multiple convolutional layers with different dilation rates that capture features on different scales. To leverage similar designs for 3D seismic images, several design considerations were incorporated to optimize the architecture and improve the performance on 3D seismic and to ensure that such a model fits into the hardware memory with reasonable training time:
1. Build an encoder-decoder architecture in three dimensions
2. Use a light-weight mobile encoder such as ShuffleNet or MobileNet for both computational and memory efficiency
3. At the end of the encoder, a parallel system of atrous convolutions with varying rates were applied to encode features on multiple scales
4. Inspired by our recent empirical results from the single network, multi-pass tests, instead of the more common equal atrous rates in all dimensions, rectangular rates of 1-1-2, 2-2-1, 4-4-6 and 6-6-4 were used to extract different aspect ratios, too. The actual rates can be adjusted based on the training sample size.
5. Image-level feature in certain 2D image segmentation models is not used for the image-image translation task
6. The features extracted by different rates are concatenated and convolved with a series of 3x3x3 kernels to generate dense features of varying scales
7. Two-level hierarchical skip connections were employed to add complimentary high-res textural information
8. Large training samples of 320x320x320 were used to increase receptive field and to accommodate the much larger dilated convolutional filters
9. Mixed-precision training was used to reduce GPU memory footprint and speed up training

The trained models using the neural architecture above incorporate multi-scale features to:
1. achieve better noise attenuation in moderate S/N sediment basins
2. resolve structural ambiguity based on large-scale contextual information in the deep, low S/N subsalt areas, potentially assist structural interpretation decision making in challenging areas and impact hydrocarbon reservoir delineation and well planning.
3. simplify the windowed multi-pass workflow as the multiple atrous convolutions are more tolerant to scale variation in 3D seismic images and requires fewer manual-intensive experimentations
4. the prediction result can either be used in interpretation for easier decision making, or as a guiding signal model for gather processing or seismic inversion.

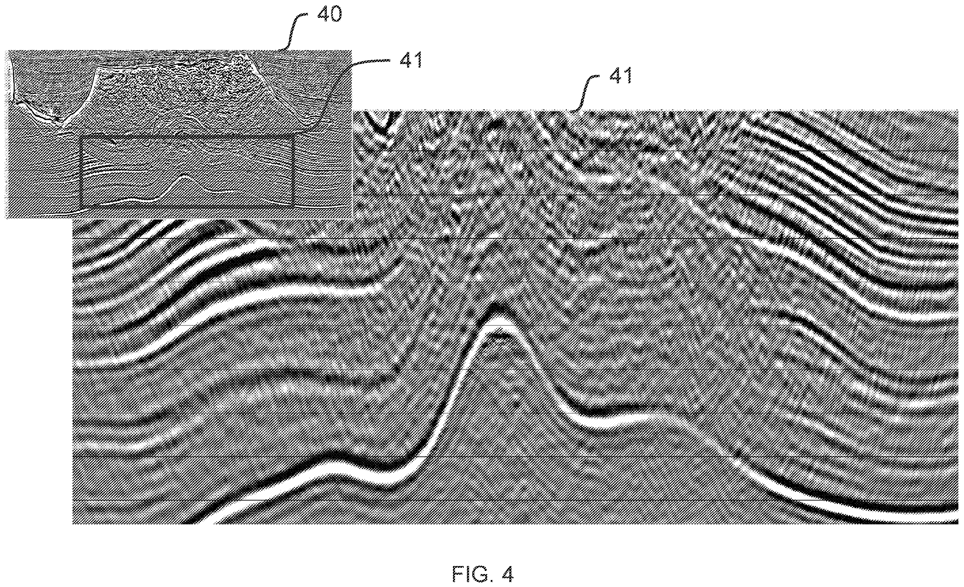

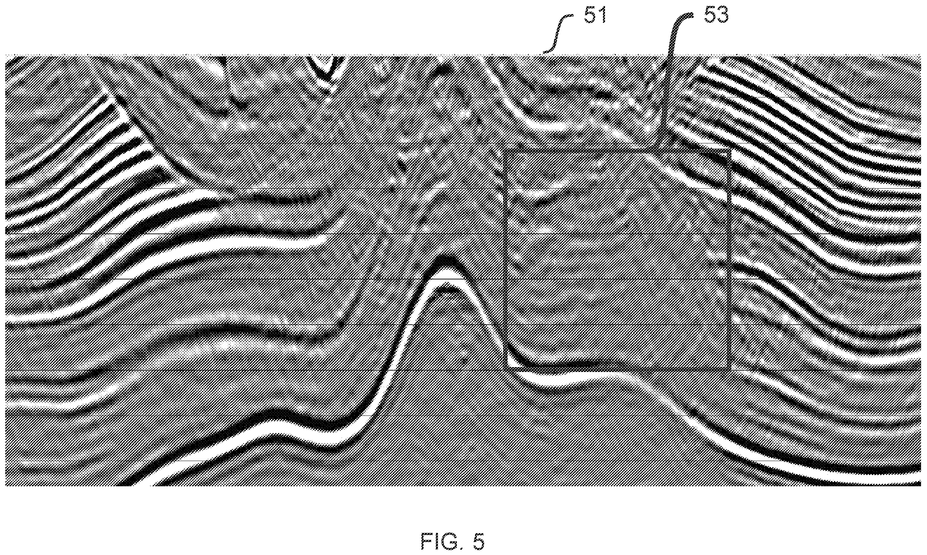

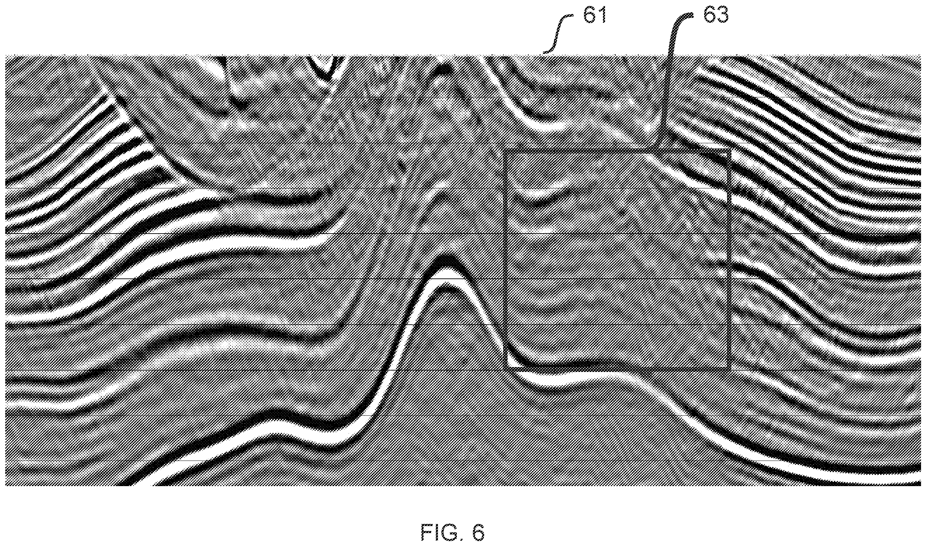

Figure 4 is a synthetic example of a seismic image. For this example, concentrate on the subsalt image 41 from the full image 40. This synthetic image has poor signal to noise ratio (S/N). Figure 5 is the result of seismic image enhancement using machine-learning without atrous convolution. The subsalt image 51 has failed to improve the image in area 53. Figure 6 is the result of seismic image enhancement using machine-learning with atrous convolution. The subsalt image 61 has improved the image in area 63 such that the seismic events are much more continuous. The bigger field of view due to the use of the atrous convolution in the training of the neural network leads to better decisions on noise/structural distinction because large-scale, contextual information has been used to recover the structure.

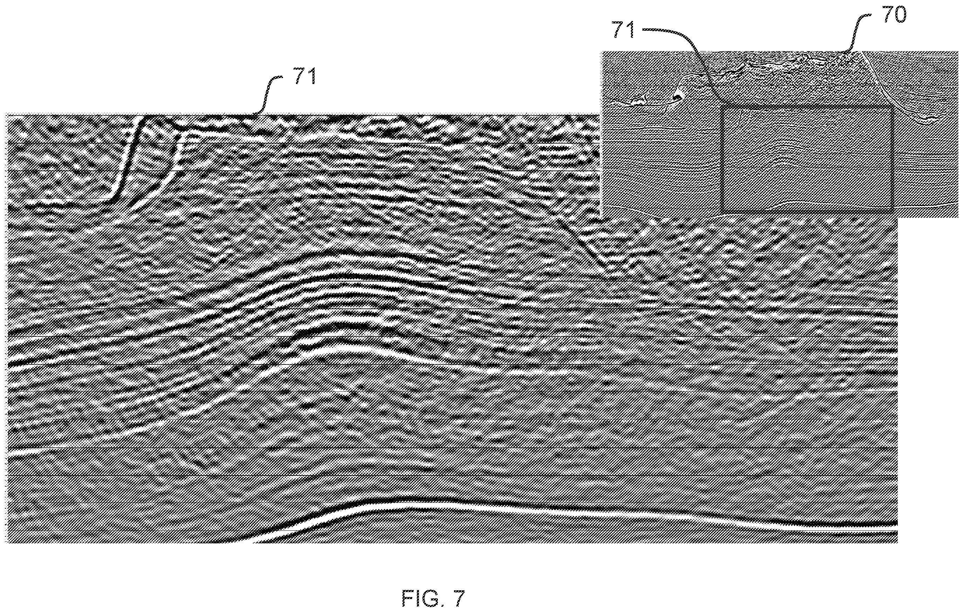

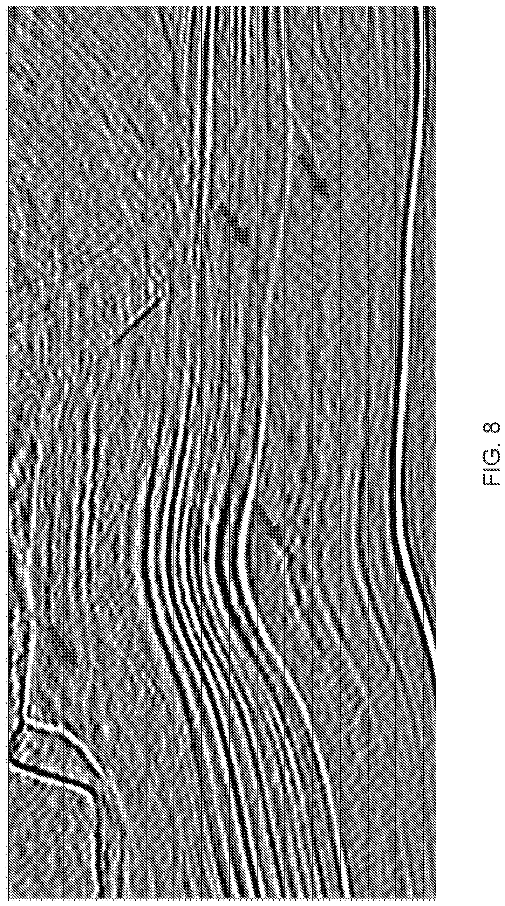

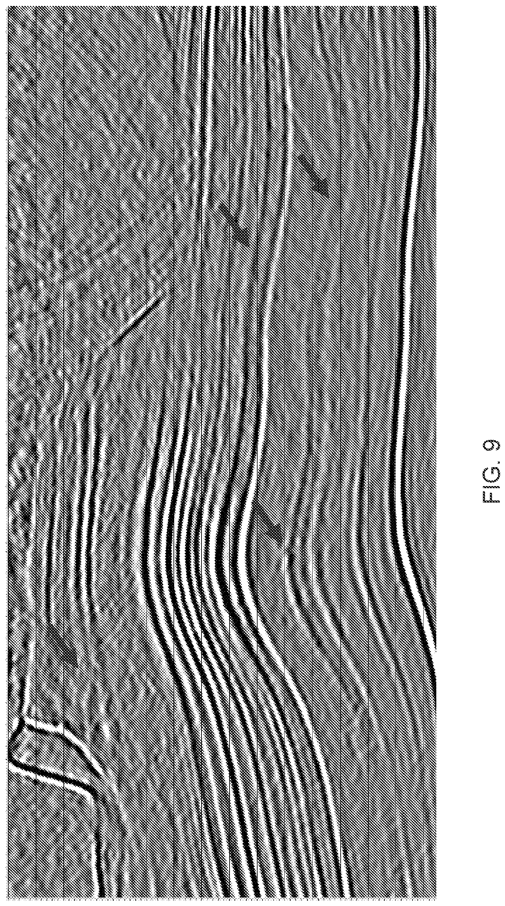

Figure 7 is a synthetic example of a seismic image. For this example, concentrate on the subsalt image 71 from the full image 70. Once again, this synthetic image has poor signal to noise ratio (S/N). Figure 8 is the result of seismic image enhancement using machine-learning without atrous convolution. In Figure 8, the arrows indicate areas where the image is still poor. Figure 9 is the result of seismic image enhancement using machine-learning with atrous convolution. The arrows point to the same areas, showing much improvement over Figures 7 and 8.

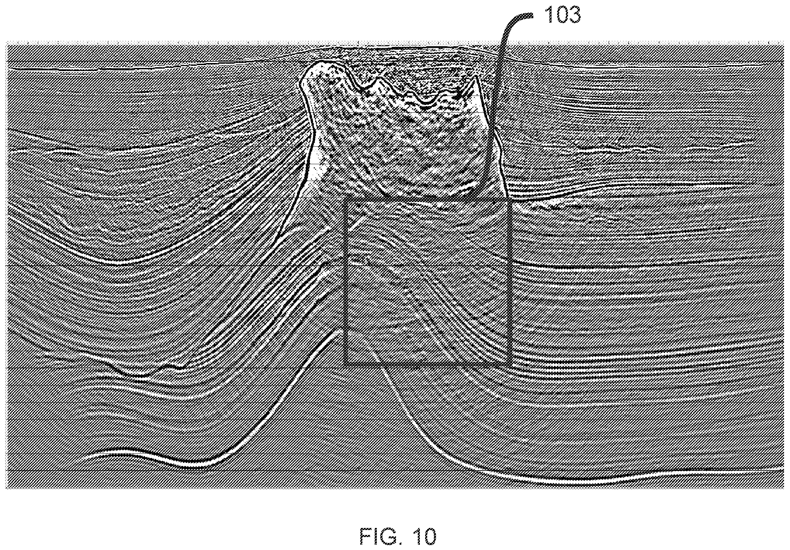

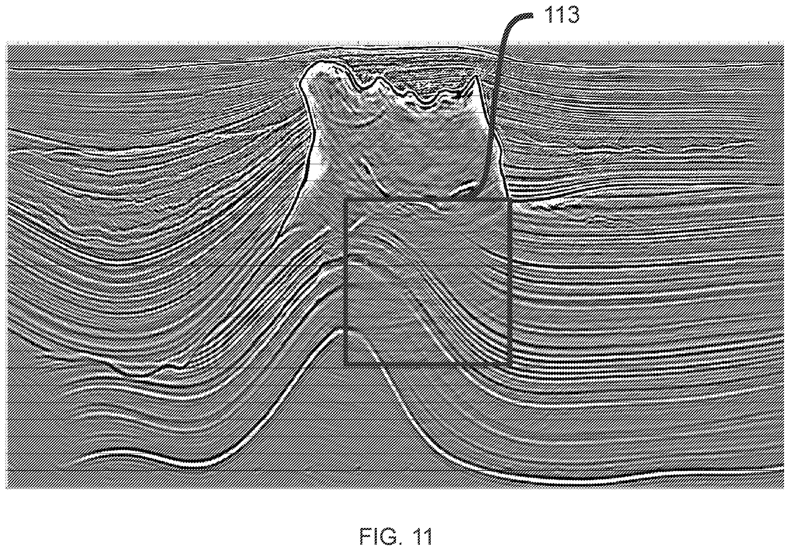

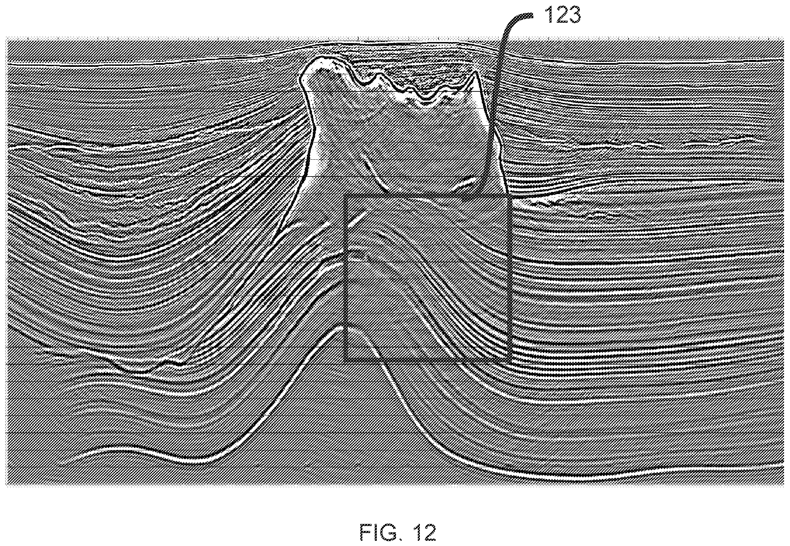

Figure 10 is another synthetic example of a seismic image. This synthetic image has poor signal to noise ratio (S/N) with significant migration swings throughout the lower part of the image as indicated in area 103. Figure 11 is the result of seismic image enhancement using machine-learning without atrous convolution. Area 113 is improved but still has non-continuous events throughout. Figure 12 is the result of seismic image enhancement using machine-learning with atrous convolution. Area 123 has better S/N and more continuous events than Figure 11. The bigger field of view due to the use of the atrous convolution in the training of the neural network leads to better decisions on noise/structural distinction.

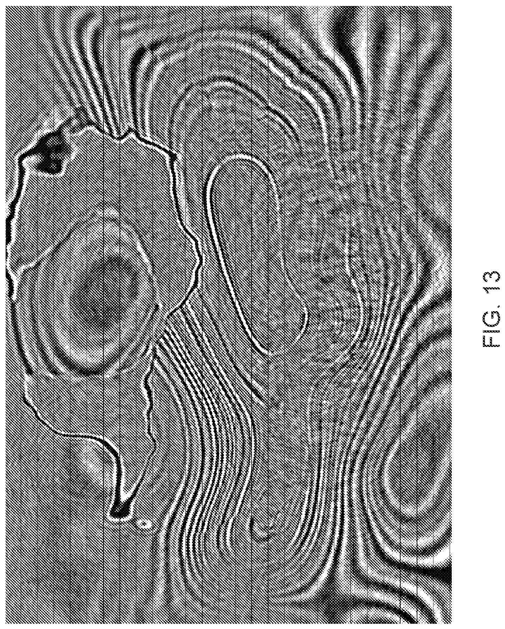

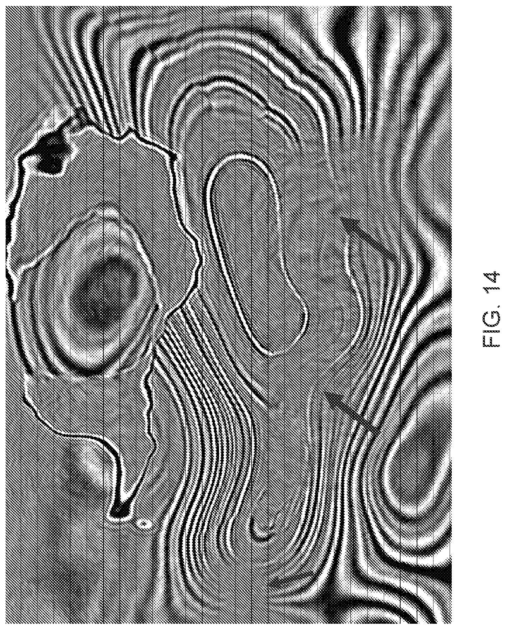

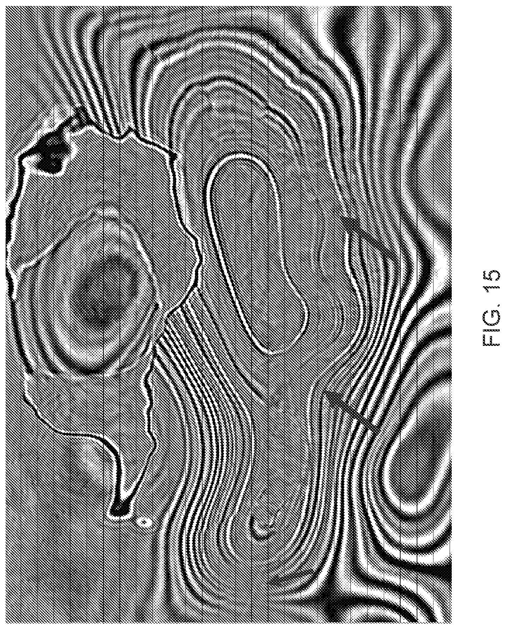

Figure 13 is a depth slice of a synthetic seismic image (a map view). This synthetic image also has poor signal to noise ratio (S/N). Figure 14 is the result of seismic image enhancement using machine-learning without atrous convolution. Figure 14 has less noise but the arrows indicate places where the seismic events are incomplete. Figure 15 is the result of seismic image enhancement using machine-learning with atrous convolution and has both better S/N and more complete seismic events at the arrows.

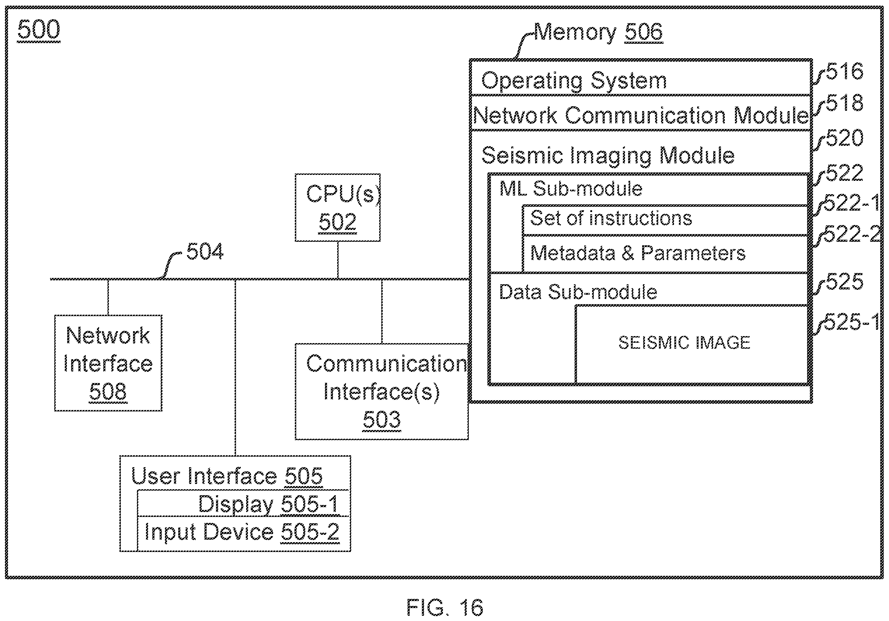

Figure 16 is a block diagram illustrating a seismic imaging system 500, in accordance with some embodiments. While certain specific features are illustrated, those skilled in the art will appreciate from the present disclosure that various other features have not been illustrated for the sake of brevity and so as not to obscure more pertinent aspects of the embodiments disclosed herein.

To that end, the seismic imaging system 500 includes one or more processing units (CPUs) 502, one or more network interfaces 508 and/or other communications interfaces 503, memory 506, and one or more communication buses 504 for interconnecting these and various other components. The seismic imaging system 500 also includes a user interface 505 (e.g., a display 505-1 and an input device 505-2). The communication buses 504 may include circuitry (sometimes called a chipset) that interconnects and controls communications between system components. Memory 506 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 506 may optionally include one or more storage devices remotely located from the CPUs 502. Memory 506, including the non-volatile and volatile memory devices within memory 506, comprises a non-transitory computer readable storage medium and may store seismic data, velocity models, seismic images, and/or geologic structure information.

In some embodiments, memory 506 or the non-transitory computer readable storage medium of memory 506 stores the following programs, modules and data structures, or a subset thereof including an operating system 516, a network communication module 518, and a seismic imaging module 520.

The operating system 516 includes procedures for handling various basic system services and for performing hardware dependent tasks.

The network communication module 518 facilitates communication with other devices via the communication network interfaces 508 (wired or wireless) and one or more communication networks, such as the Internet, other wide area networks, local area networks, metropolitan area networks, and so on.

In some embodiments, the seismic imaging module 520 executes the operations of the present method. Seismic imaging module 520 may include data sub-module 525, which handles the seismic image(s) 525-1. This seismic image(s) is supplied by data sub-module 525 to other sub-modules.

ML sub-module 522 contains a set of instructions 522-1 and accepts metadata and parameters 522-2 that will enable it to train and apply a machine-learning algorithm to enhance the seismic images. Although specific operations have been identified for the sub-modules discussed herein, this is not meant to be limiting. Each sub-module may be configured to execute operations identified as being a part of other sub-modules, and may contain other instructions, metadata, and parameters that allow it to execute other operations of use in processing seismic data and generate the seismic image. For example, any of the sub-modules may optionally be able to generate a display that would be sent to and shown on the user interface display 505-1. In addition, any of the seismic data or processed seismic data products may be transmitted via the communication interface(s) 503 or the network interface 508 and may be stored in memory 506.

The present method is, optionally, governed by instructions that are stored in computer memory or a non-transitory computer readable storage medium (e.g., memory 506 in Figure 16) and are executed by one or more processors (e.g., processors 502) of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, method 100 is described as being performed by a computer system, although in some embodiments, various operations of method 100 are distributed across separate computer systems.

While particular embodiments are described above, it will be understood it is not intended to limit the invention to these particular embodiments. On the contrary, the invention includes alternatives, modifications and equivalents that are within the scope of the appended claims. Numerous specific details are set forth in order to provide a thorough understanding of the subject matter presented herein. It should be noted and understood that there can be improvements and modifications made of the present invention described in detail above without departing from the scope of the invention as set forth in the accompanying claims.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. The embodiments were chosen and described in order to best explain the principles of the invention and its practical applications, to thereby enable others skilled in the art to best utilize the invention. It should be noted and understood that there can be improvements and modifications made of the present invention described in detail above without departing from the scope of the invention as set forth in the accompanying claims.

## Claims

1. A computer-implemented method of seismic imaging, comprising:
a. receiving training pairs of low signal-to-noise ratio 3D seismic images and high signal-to-noise ratio 3D seismic images;
b. training a neural network on the training pairs wherein the training uses atrous convolution;
c. receiving a seismic image representative of a subsurface volume of interest;
d. applying the neural network to the seismic image to generate a second seismic image; and
e. displaying the second seismic image on a graphical user interface,
wherein:
the atrous convolution uses varying rectangular atrous rates instead of equal atrous rates in all dimensions.

2. The method of claim 1 wherein the varying rectangular atrous rates comprise 1-1-2 and 2-2-1, or 1-1-2, 2-2-1, 4-4-6 and 6-6-4.

3. The method of claim 1 wherein features extracted by the varying rectangular atrous rates are concatenated and convolved with a series of 3x3x3 kernels to generate features of varying scales.

4. The method of claim 1 wherein multiple neural networks are trained on separate seismic images of different frequency, grid size and migration algorithm.

5. The method of claim 1 wherein the neural network is applied by one or multiple passes to neighboring depth ranges with different down-sampling rates.

6. The method of claim 1 wherein the training the neural network includes an encoder-decoder architecture in three dimensions.

7. A computer system (500), comprising:
one or more processors (502); and
memory (506);
wherein one or more programs are stored in the memory (506) and configured to be executed by the one or more processors (502), the one or more programs including instructions that when executed by the one or more processors (502) cause the system (500) to carry out the method of any of claims 1 to 6.

8. One or more programs comprising instructions which, when executed by an electronic device (500) with one or more processors (502) and memory (506), cause the device (500) to carry out the method of any of claims 1 to 6.

9. A non-transitory computer readable storage medium (506) storing the one or more programs of claim 8.

## Patentansprüche

1. Computerimplementiertes Verfahren zur seismischen Abbildung, das Folgendes umfasst:
a. Empfangen von Trainingspaaren von seismischen 3D-Bildern mit niedrigem Signal-Rausch-Verhältnis und seismischen 3D-Bildern mit hohem Signal-Rausch-Verhältnis;
b. Trainieren eines neuronalen Netzes an den Trainingspaaren, wobei das Trainieren Atrous Convolution verwendet;
c. Empfangen eines seismischen Bilds, das ein unterirdisches Volumen von Interesse darstellt;
d. Anwenden des neuronalen Netzes auf das seismische Bild, um ein zweites seismisches Bild zu generieren; und
e. Anzeigen des zweiten seismischen Bilds auf einer grafischen Benutzeroberfläche,
wobei:
die Atrous Convolution variierende Rechteck-Atrous-Raten anstatt gleiche Atrous-Raten in allen Dimensionen verwendet.

2. Verfahren nach Anspruch 1, wobei die variierenden Rechteck-Atrous-Raten 1-1-2 und 2-2-1 oder 1-1-2, 2-2-1, 4-4-6 und 6-6-4 umfassen.

3. Verfahren nach Anspruch 1, wobei durch die variierenden Rechteck-Atrous-Raten extrahierte Merkmale mit einer Reihe von 3x3x3 Kernels verkettet und gefaltet werden, um Merkmale mit variierendem Maßstab zu generieren.

4. Verfahren nach Anspruch 1, wobei mehrere neuronale Netze an separaten seismischen Bildern mit unterschiedlicher Frequenz, Rastergröße und unterschiedlichem Migrationsalgorithmus trainiert werden.

5. Verfahren nach Anspruch 1, wobei das neuronale Netz durch einen oder mehrere Durchgänge auf benachbarte Tiefenbereiche mit unterschiedlichen Downsampling-Raten angewendet wird.

6. Verfahren nach Anspruch 1, wobei das Trainieren des neuronalen Netzes eine Encoder-Decoder-Architektur in drei Dimensionen beinhaltet.

7. Computersystem (500), das Folgendes umfasst:
einen oder mehrere Prozessoren (502); und
einen Speicher (506);
wobei ein oder mehrere Programme in dem Speicher (506) gespeichert und dazu ausgelegt sind, durch den einen oder die mehreren Prozessoren (502) ausgeführt zu werden, wobei das eine oder die mehreren Programme Anweisungen enthalten, die bei Ausführung durch den einen oder die mehreren Prozessoren (502) bewirken, dass das System (500) das Verfahren nach einem der Ansprüche 1 bis 6 ausführt.

8. Ein oder mehrere Programme, umfassend Anweisungen, die bei Ausführung durch eine elektronische Vorrichtung (500) mit einem oder mehreren Prozessoren (502) und einem Speicher (506) bewirken, dass die Vorrichtung (500) das Verfahren nach einem der Ansprüche 1 bis 6 ausführt.

9. Nichtflüchtiges computerlesbares Speichermedium (506), das das eine oder die mehreren Programme nach Anspruch 8 speichert.

## Revendications

1. Procédé d'imagerie sismique mis en œuvre par ordinateur, le procédé comprenant les étapes suivantes :
a. recevoir des paires d'entraînement d'images sismiques 3D à faible rapport signal/bruit et d'images sismiques 3D à rapport signal/bruit élevé ;
b. entraîner un réseau neuronal sur les paires d'entraînement, l'entraînement utilisant la convolution avec trous ;
c. recevoir une image sismique représentative d'un volume souterrain d'intérêt ;
d. appliquer le réseau neuronal à l'image sismique pour générer une deuxième image sismique ; et
e. afficher la deuxième image sismique sur une interface utilisateur graphique, où :
la convolution avec trous utilise des taux de trous rectangulaires variables au lieu de taux de trous égaux dans toutes les dimensions.

2. Procédé selon la revendication 1, dans lequel les taux de trous rectangulaires variables comprennent 1-1-2 et 2-2-1, ou 1-1-2, 2-2-1, 4-4-6 et 6-6-4.

3. Procédé selon la revendication 1, dans lequel les caractéristiques extraites par les taux de trous rectangulaires variables sont concaténées et convolues avec une série de noyaux 3x3x3 pour générer des caractéristiques d'échelles variables.

4. Procédé selon la revendication 1, dans lequel plusieurs réseaux neuronaux sont entraînés sur des images sismiques distinctes de fréquences, de tailles de grilles et d'algorithmes de migration différents.

5. Procédé selon la revendication 1, dans lequel le réseau neuronal est appliqué par un ou plusieurs passages à des plages de profondeurs voisines avec différents taux de sous-échantillonnage.

6. Procédé selon la revendication 1, dans lequel l'entraînement du réseau neuronal comprend une architecture codeur-décodeur en trois dimensions.

7. Système informatique (500) comprenant un ou plusieurs processeurs (502) ; et
une mémoire (506) ;
où un ou plusieurs programmes sont stockés dans la mémoire (506) et sont configurés pour être exécutés par les un ou plusieurs processeurs (502), les un ou plusieurs programmes comprenant des instructions qui, lorsqu'elles sont exécutées par les un ou plusieurs processeurs (502), amènent le système (500) à exécuter le procédé selon l'une quelconque des revendications 1 à 6.

8. Un ou plusieurs programmes comprenant des instructions qui, lorsqu'elles sont exécutées par un dispositif électronique (500) doté d'un ou de plusieurs processeurs (502) et d'une mémoire (506), amènent le dispositif (500) à mettre en œuvre le procédé de l'une quelconque des revendications 1 à 6.

9. Support de stockage non transitoire lisible par ordinateur (506) stockant les un ou plusieurs programmes de la revendication 8.
